Europäisches Patentamt

European Patent Office

Office européen des brevets

(19)

(11) **EP 1 538 569 A2**

(12) **EUROPEAN PATENT APPLICATION**

(43) Date of publication:
**08.06.2005 Bulletin 2005/23**

(51) Int Cl.⁷: $G06T\ 15/30$

(21) Application number: **04292780.6**

(22) Date of filing: **25.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **01.12.2003 KR 2003086182**
**01.12.2003 KR 2003086183**

(71) Applicant: **LG Electronics Inc.**
**Seoul 150-875 (KR)**

(72) Inventors:
• **Joe Moon Jeung**
  **Dongan-gu, Anyang-si Gyeonggi-do**
  **431-070 (KR)**
• **Cho Hang Shin**
  **Gyeonggi-do 462-838 (KR)**

(74) Representative: **Loisel, Bertrand**
  **Cabinet Plasseraud**
  **65/67 rue de la Victoire**
  **75440 Paris Cedex 09 (FR)**

(54) **Line clipping method and method for displaying a three-dimensional image using the same**

(57)     A clipping plane is formed between a projection center position and a projection plane such that the clipping plane is parallel to the projection plane. A three-dimensional line is subjected to clipping at the clipping plane.

It is determined whether respective nodes constituting a three-dimensional line in a three-dimensional image to be projected onto the projection plane exist inside or outside a view volume, by comparing z-axis values of the nodes with a z-axis value of the clipping plane with respect to the projection center position. If the nodes of the three-dimensional line exist both inside and outside the view volume, a new three-dimensional line is constructed using nodes existing inside the view volume and intersections between the current three-dimensional line and the clipping plane, or using only the nodes existing inside the view volume.

**EP 1 538 569 A2**

## Description

## BACKGROUND OF THE INVENTION

### 1. Field of the Invention

The present invention relates to a line clipping method for removing an unnecessary link from a three-dimensional line with a node and link structure in a certain three-dimensional image such as a three-dimensional map when the three-dimensional line is displayed on a screen of a display panel in a three-dimensional navigation system or three-dimensional game, and a method for displaying a three-dimensional image using through line clipping, wherein the three-dimensional image is displayed on the screen by clipping three-dimensional lines for the three-dimensional image by means of the line clipping method.

### 2. Description of the Related Art

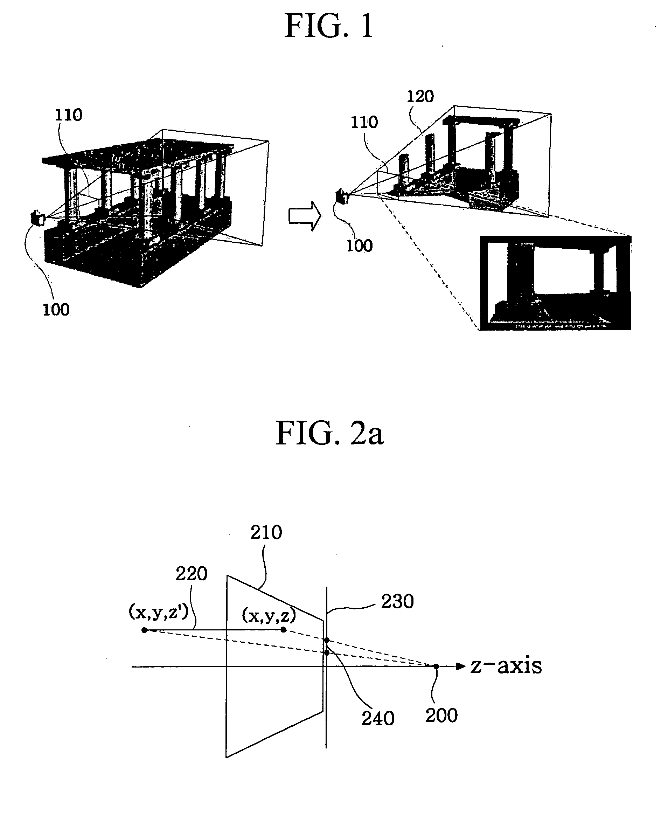

Conventional processing for three-dimensional graphics includes clipping for clipping a portion of a three-dimensional image that is not intended to be displayed on a screen. For example, as shown in Fig. 1, the clipping is to remove data on portions of a three-dimensional image placed outside the boundary of a view volume 120 when the three-dimensional image is viewed from a projection center position 100 as a view point, while data on portions of the three-dimensional image placed inside the boundary of the view volume 120, i.e. inside six planes including a projection plane 110 and upper, lower, left, right and back sides of the view volume 120, are projected onto the projection plane 110. This is to reduce the amount of data required for processing a three-dimensional image, thereby reducing the amount of calculation and improving a processing rate.

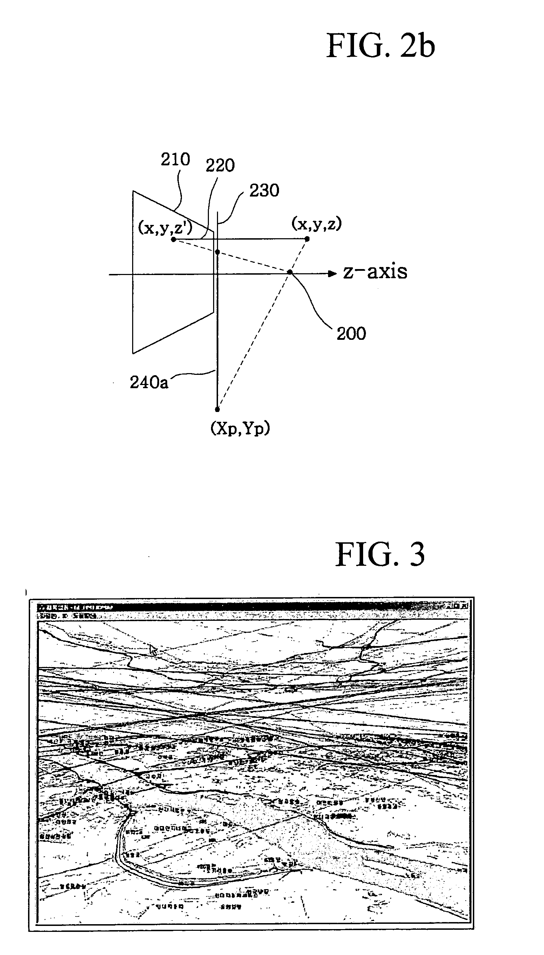

Further, when a three-dimensional line is projected onto the projection plane, nodes for the three-dimensional line, which exist at the rear of the projection center position 100, are reverse projected in an opposite direction contrary to expectation. Thus, they should be removed through line clipping. That is, as shown in Fig. 2a, if a three-dimensional line 220 existing inside the boundary of a view volume 210 when viewed from a projection center position 200 is projected onto a projection plane 230, it is projected as a two-dimensional line 240 on the projection plane 230. However, as shown in Fig. 2b, if one side node for the three-dimensional line 220 with coordinates (x, y, z) exists at the rear of the projection center position 200, the coordinates (x, y, z) of the node is projected as projected coordinates $(x_p, y_p)$ on the projection plane 230, leading to the occurrence of an error by which the three-dimensional line 220 is projected as an inaccurate two-dimensional line 240a on the projection plane 230.

Fig. 3 shows an actual example of the occurrence of such an error. It can be seen from the figure that a road and a stream of water are inaccurately displayed in a floating state on a three-dimensional map displayed on a screen.

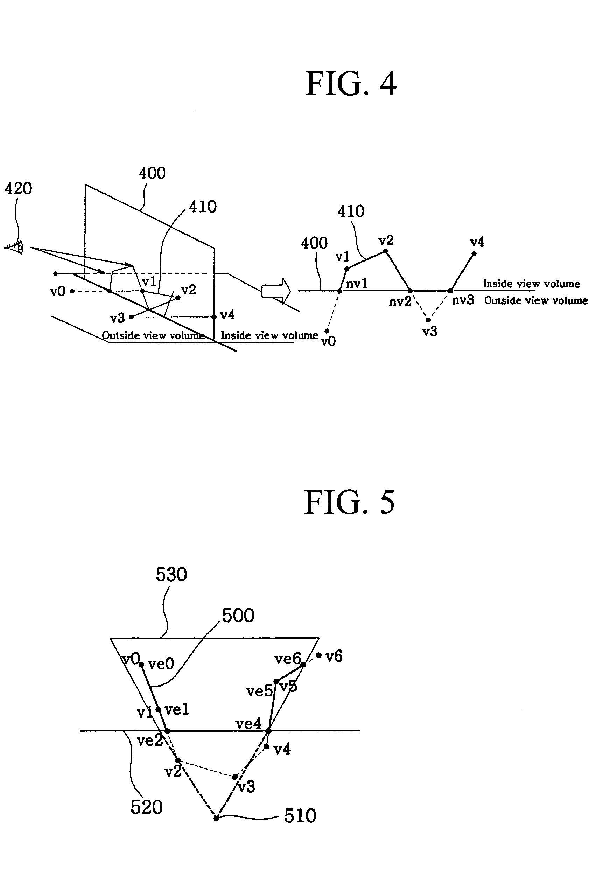

Fig. 4 is a view illustrating an actual concept of line clipping and projection in which a link of a three-dimensional line 410 existing outside a projection plane 400, i.e. outside a view volume, is removed through clipping from the projection plane 400, and only nodes existing inside the projection plane 400, i.e. inside the view volume, when viewed from a projection center position 420 are projected onto the projection plane 400. This is to calculate coordinates of intersections between the three-dimensional line 410 and the projection plane 400 and to generate a three-dimensional line with a new structure consisting of the calculated coordinates of the intersections and coordinates of the nodes existing inside the projection plane 400.

For example, intersections nv1, nv2 and nv3 between the projection plane 400 and the three-dimensional line 410 with connected nodes and links consisting of v0, v1, v2, v3 and v4 are obtained, and nodes v0 and v3 existing outside the view volume are removed, thereby performing conversion into a three-dimensional line 410 with a new structure consisting of six nodes nv1, v1, v2, nv2, nv3 and v4.

In conventional line clipping, line clipping is performed at six sides, i.e. projection plane and upper, lower, left, right and back sides of a view volume. For example, as shown in Fig. 5, as for a three-dimensional line 500 consisting of seven nodes of v0, v1, v2, v3, v4, v5 and v6, intersections ve2, ve4 and ve6 between the three-dimensional line 500 and six sides including a projection plane 520 and upper, lower, left, right and back sides of a view volume 530 when viewed from a projection center position 510 are calculated to generate a three-dimensional line with a new structure consisting of ve0(v0), ve1(v1), ve2, ve4, ve5(v5) and ve6.

In the conventional technique, however, it is necessary to perform complicated processes including sequential searches for determination as to whether respective nodes and links constituting a three-dimensional line intersect at six boundary sides of a view volume, calculation of intersections and line clipping in case of the presence of the intersections, reallocation of a memory for storing the structure of a three-dimensional line consisting of new nodes and links resulting from the line clipping, and the like. Thus, a clipping rate for a three-dimensional line is very low, which causes a problem in that it is difficult to display a three-dimensional image such as a three-dimensional map in low-performance mobile equipment such as mobile communication terminals.

## SUMMARY OF THE INVENTION

An object of the present invention is to provide a line clipping method and a method for displaying a three-dimensional image using the line clipping method, wherein the amount of calculation can be reduced and the efficiency of calculation can be improved in displaying the three-dimensional image such as a three-dimensional map.

Another object of the present invention is to provide a line clipping method and a method for displaying a three-dimensional image using the line clipping method, wherein a display rate for components of a three-dimensional line can be improved in displaying the three-dimensional image including a three-dimensional map.

A further object of the present invention is to provide a line clipping method and a method for displaying a three-dimensional image using the line clipping method, wherein a three-dimensional line is subjected to approximate line clipping, thereby improving a clipping rate.

A still further object of the present invention is to provide a line clipping method and a method for displaying a three-dimensional image using the line clipping method, wherein a three-dimensional map can be displayed even on a screen of low-performance mobile equipment.

An embodiment of the present invention for achieving the objects proposes a novel method in which, contrary to general processing processes for general three-dimensional graphics that require clipping for six planes of a view volume, a clipping plane is defined between a projection plane and a projection center position as a view point such that the clipping plane is parallel to the projection plane, and clipping is performed at the clipping plane, thereby displaying three-dimensional lines on a screen without the occurrence of an error.

According to the embodiment of the present invention, a three-dimensional line with a general structure consisting of nodes and links is inputted and used. Primary clipping is performed in case of loading two-dimensional map data or previously three-dimensionally modeled data, and secondary clipping is performed before projection conversion is performed. In case of loading the two-dimensional data or three-dimensionally modeled data, the primary clipping is performed by loading only two-dimensional data or three-dimensionally modeled data on surroundings of the projection center position. That is, only data on a certain area including the inside of the view volume to be projected onto the projection plane are loaded. Accordingly, indirect clipping is performed to improve the efficiency of use of a memory.

The secondary clipping is to remove links and nodes, which exist at the rear of the projection center position, among components constituting a three-dimensional line. An arbitrary plane that is interposed between the projection center position and the projection plane and is parallel to the projection plane is defined as the clipping plane, and the line clipping is performed directly at the clipping plane. Here, the outside of the clipping plane is referred to as the outside of the view volume, and the inside of the clipping plane is referred to as the inside of the view volume.

The secondary clipping is performed for three-dimensional lines lying across the clipping plane. If all nodes constituting a three-dimensional line exist outside the view volume, the nodes are completely removed. If all nodes constituting a three-dimensional line exist inside the view volume, the nodes are projected onto the projection plane.

If some of nodes constituting a three-dimensional line exist outside the view volume while others exist inside the view volume, it means that the three-dimensional line lies across the clipping plane. During the secondary clipping process, intersections between the three-dimensional line and the clipping plane are obtained, and a new three-dimensional line is generated with nodes existing inside both the intersections and the view volume.

Upon generating the new three-dimensional line, the number of intersections between the three-dimensional line and the clipping plane is first obtained. The memory is reallocated to store coordinates of which the number is the sum of the obtained number of intersections and a value obtained by subtracting the number of nodes existing outside the view volume from the total number of nodes constituting the three-dimensional line.

The coordinates of the intersections between the three-dimensional line and the clipping plane can be expressed as a predetermined parameter equation. The parameter equation can be solved by obtaining a parameter t when a z-axis value of the clipping plane is set to k. Thus, the coordinates of the intersections between the three-dimensional line and the clipping plane can be obtained simply.

As for actual procedures of the secondary clipping, respective links of the three-dimensional line lying across the clipping plane are searched sequentially, and coordinates of nodes constituting a new three-dimensional line are then determined.

The coordinates of the nodes constituting the new three-dimensional line are determined as set forth below.

If a link extending from a current node to the next node is a link proceeding from the inside of the view volume to the outside of the view volume, coordinates of the current node are assigned as coordinates of a node for the new three-dimensional line, coordinates of an intersection between the current link and the clipping plane are calculated, and the calculated coordinates of the intersection is added as coordinates of a node for the new three-dimensional line.

If a link extending from a current node to the next node is a link proceeding from the outside of the view volume to the inside of the view volume, coordinates of an intersection between the current link and the clipping plane are calculated, and the calculated coordinates of the intersection is added as coordinates of a node for the new three-dimensional line.

If both a current node and the next node exist inside the view volume, coordinates of the current node is assigned as coordinates of a node for the new three-dimensional line.

If both a current node and the next node exist outside the view volume, nothing is performed.

According to the embodiment of the present invention, three-dimensional lines existing inside the view volume, which are determined through the aforementioned procedures, are projected onto the projection plane and then displayed on a screen in the same manner as processing for general three-dimensional graphics.

In another embodiment of the present invention, without generating a three-dimensional line with a new structure to be projected onto a projection plane through calculation of an intersection between a three-dimensional line and the projection plane upon clipping the three-dimensional line, a clipping plane is defined between a projection center position and the projection plane to be parallel to the projection plane, only nodes existing inside the clipping plane, i.e. inside a view volume, are connected to generate a three-dimensional line with a new structure, and the generated three-dimensional line is projected onto the projection plane and displayed on a screen. Thus, an erroneous portion produced due to the clipping of the three-dimensional line is placed between the projection plane and the clipping plane, so that the erroneous portion produced due to the approximate clipping cannot be displayed on the screen.

According to this embodiment of the present invention, as for a three-dimensional line lying across the projection plane, intersections between the three-dimensional line and the projection plane are not obtained during the secondary clipping process, and a three-dimensional line with a new structure consisting of only nodes, which exist inside the view volume, among nodes constituting the previous three-dimensional line is generated. Accordingly, it is possible to eliminate the complicated processes of determining whether a three-dimensional line intersects at the six sides of the boundary of the view volume and calculating intersections if there are intersections therebetween, thereby improving the processing rate of clipping.

To generate a new three-dimensional line with a new structure, without allocating a memory based on the number of nodes for a three-dimensional line existing inside the view volume or changing the structure of the memory in which nodes for the three-dimensional line will be stored, coordinates of nodes existing outside the view volume are set to values copied from coordinates of a node existing at an adjacent position inside the view volume.

If the memory is allocated based on the number of nodes existing inside the view volume, a new three-dimensional line consisting of only the nodes existing inside the view volume is generated while nodes for a three-dimensional line are sequentially searched, and the new three-dimensional line is projected onto the projection plane so that it can be converted into a two-dimensional line which in turn is displayed on the screen.

The copying of the coordinates of the node, which exists at the adjacent position inside the view volume, as the coordinates of the nodes existing outside the view volume is performed by selecting the nodes existing outside the view volume while sequentially searching the nodes for the three-dimensional line, and by copying coordinates of the previous node existing inside the view volume as the coordinates of the nodes existing outside the view volume. Thus, a three-dimensional line can be simply reconstructed at a high rate without changing the structure of the memory or reallocating the memory.

If a starting node for a three-dimensional line exists outside the view volume, a new three-dimensional line is constructed by finding a node, which is first located inside the view volume, among nodes for the three-dimensional line, and copying coordinates of the node that is first located inside the view volume as coordinates of a previous node.

According to this embodiment of the present invention, some clipping errors that may occur upon performing approximate clipping of a three-dimensional line and may be displayed at a lower end portion of a screen of a display panel are prevented from being displayed on the screen when a three-dimensional image is projected onto the projection plane and displayed on the screen, by placing the clipping plane close to the projection center position and far away from the projection plane.

According to the present invention, when a three-dimensional image is processed and then displayed on a screen, the amount of calculation is greatly reduced and a calculation rate becomes high, whereby a three-dimensional image such as a three-dimensional map can be displayed in low-performance mobile equipment such as mobile communication terminals.

## BRIEF DESCRIPTION OF THE DRAWINGS

The above and other objects, features and advantages of the present invention will become apparent from the following description of preferred embodiments given in conjunction with the accompanying drawings, in which:

Fig. 1 is a view illustrating a clipping method included in general processing procedures for three-dimensional graphics;

Figs. 2a and 2b are views illustrating a phenomenon in which a three-dimensional line existing at the rear of a projection center is reverse projected;

Fig. 3 is a view showing an output error produced in displaying a three-dimensional map;

Fig. 4 is a view illustrating an actual concept of clipping and projection of a three-dimensional line;

Fig. 5 is a view illustrating a conventional line clipping method;

Fig. 6 is a block diagram exemplarily showing a configuration of a navigation system to which a line clipping method and a method for displaying a three-dimensional image using the line clipping method according to the present invention are applied;

Figs. 7a to 7c are flowcharts illustrating the process of converting a two-dimensional map into a three-dimensional map and displaying the three-dimensional map on a screen while performing line clipping according to an embodiment of the line clipping method of the present invention;

Fig. 8 is a view illustrating an operation for calculating coordinates of an intersection between a clipping plane and a three-dimensional line in the line clipping method of the present invention;

Fig. 9 is a view illustrating a concept of an embodiment of the line clipping method of the present invention;

Figs. 10a and 10b are flowcharts illustrating the process of converting a two-dimensional map into a three-dimensional map and displaying the three-dimensional map on a screen while performing approximate clipping for three-dimensional lines according to another embodiment of the line clipping method of the present invention;

Fig. 11 is a flowchart illustrating an example of generation of a new three-dimensional line in Fig. 10a;

Figs. 12a and 12b are views illustrating an operation in the example of the generation of the new three-dimensional line shown in Fig. 11;

Fig. 13 is a flowchart illustrating another example of the generation of a new three-dimensional line in Fig. 10a; and

Figs. 14a and 14b and Figs. 15a and 15b are views illustrating an operation in the example of the generation of the new three-dimensional line shown in Fig. 13.

## DETAILED DESCRIPTION OF THE INVENTION

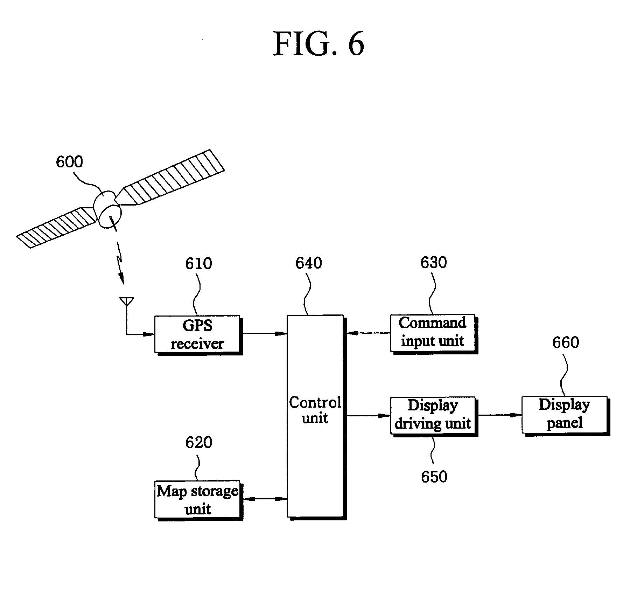

Hereinafter, a line clipping method and a method for displaying a three-dimensional image using the line clipping method according to the present invention will be described in detail with reference to the accompanying drawings, especially Figs. 6 to 15.

Fig. 6 is a block diagram exemplarily showing a configuration of a navigation system to which the line clipping method and the method for displaying a three-dimensional image using the line clipping method according to the present invention are applied. As shown in the figure, the navigation system comprises a GPS (global positioning system) receiver 610 for receiving navigation messages transmitted by a plurality of GPS satellites 600; a map data storage unit 620 for beforehand storing map data with two-dimensional coordinates therein; a command input unit 630 for receiving operation commands according to user's manipulation; a control unit 640 capable of controlling operations for determining a current vehicle location from the navigation messages received by the GPS receiver 610, for reading out map data with two-dimensional coordinates for a certain area from the map data storage unit 620 based on the determined current vehicle location, for converting the read map data with two dimensional coordinates into map data with three-dimensional coordinates, and for displaying the map data with three-dimensional coordinates so as to guide a travel path of a vehicle; and a display driving unit 650 for causing the current vehicle location and the travel path together with a three-dimensional map to be displayed on a display panel 660 under the control of the control unit 640.

The GPS receiver 610 of the navigation system constructed as above receives the navigation messages respectively transmitted by the plurality of GPS satellites 600 and inputs them into the control unit 640.

When a vehicle travels, the control unit 640 determines the current vehicle location using the navigation messages received by and input from the GPS receiver 610 and reads out map data with two-dimensional coordinates for a certain area from the map storage unit 620 based on the determined current vehicle location.

Then, the control unit 640 converts the read map data with two-dimensional coordinates into map data with three-dimensional coordinates while clipping three-dimensional lines by means of the line clipping method of the present invention. The control unit 640 then outputs the converted map data with three-dimensional coordinates to the display driving unit 650 so that a three-dimensional map can be displayed on the display panel 660. At this time, the determined current vehicle location is simultaneously displayed in the form of an arrow or the like in the three-dimensional map to guide the travel of the vehicle.

Here, the navigation system has been described by way of example as being fixedly installed at the vehicle. On the contrary, in a case where such a navigation system is installed in mobile equipment, there is a limitation on the storage capacity of the map storage unit 620. Accordingly, in response to commands from the command input unit 630, connection may be made to a map-providing server to download map data with two-dimensional coordinates for a certain area, for example, the entire area of Seoul City, and the downloaded map data with two-dimensional coordinates may be stored in the map storage unit 620 and then used.

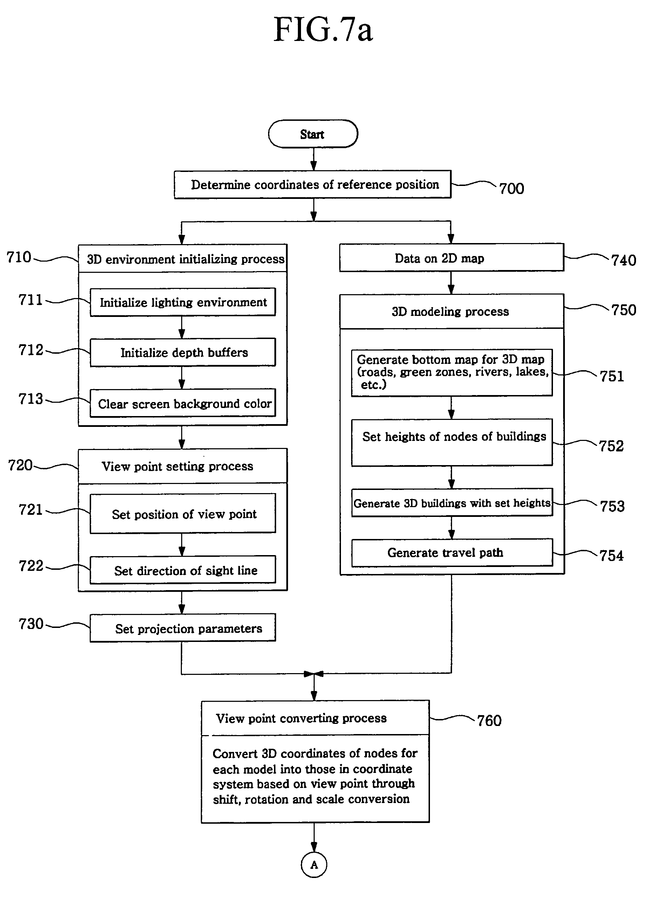

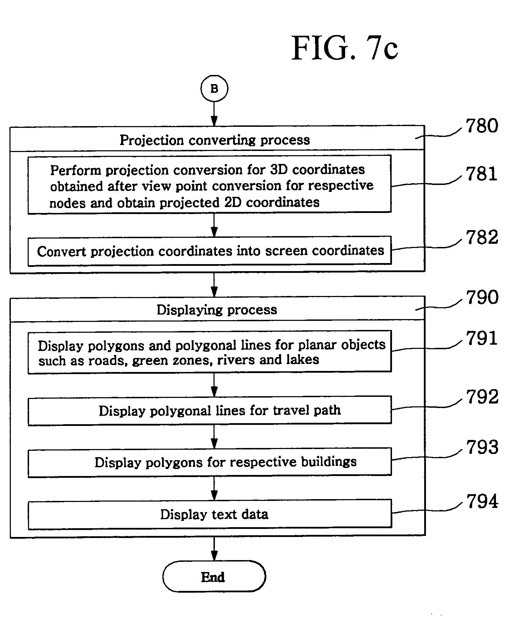

Figs. 7a to 7c are flowcharts illustrating a process in which the control unit 640 converts map data with two-dimensional coordinates into map data with three-dimensional coordinates while performing line clipping according to the line clipping method of the present invention and displays the map data with three-dimensional coordinates on a screen. As shown in Fig. 7a, the control unit 640 determines coordinates of a reference position (step 700). Here, coordinates of a current vehicle location that the control unit 640 detects from navigation messages received by the GPS receiver 610, or coordinates of a position inputted through the command input unit 630 by a user may be determined as the coordinates of the reference position.

When the coordinates of the reference position has been completely determined in step 700, the control unit 640 performs the process of initializing three-dimensional environments for displaying a three-dimensional map or three-dimensional models on the display panel 660 (step 710). The process of initializing the three-dimensional environments performed in step 710 comprises the following steps. A lighting environment is initialized (step 711). The initialization of the lighting environment in step 711 sets a view point, a sight line, the direction of a light source, the intensity of the light source, colors and their depths for indicating respective sides of buildings according to the angles of the respective sides of the buildings, and the like. Then, depth buffers are initialized (step 712). That is, the depth buffers for indicating distances from the view point to positions where certain objects will be displayed are initialized. Then, a background color of the screen of the display panel is cleared and set to a predetermined color (step 713).

When the process of initializing the three-dimensional environments is completed in step 710, the control unit 640 performs the process of setting a view point (step 720). The process of setting the view point in step 720 comprises the following steps. First, the position of the view point is set (step 721). As for the setting of the position of the view point, for example, a position elevated by a predetermined height at the coordinates of the reference position determined in step 700 are set as the view point. In step 722, a sight line that refers to a direction in which a three-dimensional map or model is viewed from the set position of the view point is then set. For example, a travel direction of the vehicle that is determined by the control unit 640 from the navigation messages received by the GPS receiver 610 is set as the sight line.

When the process of setting the view point is completed in step 720, the control unit 640 sets projection parameters for use in projection conversion in which map data with three-dimensional coordinates will be projected onto a projection plane (step 730).

While the control unit 640 sequentially performs the three-dimensional environment initializing process in step 710, the view point setting process in step 720 and the projection parameter setting process in step 730, the control unit loads map data with two-dimensional coordinates, which will be converted into map data with three-dimensional coordinates, from the map storage unit 620 (step 740). Here, the loading of the map data with two-dimensional coordinates is performed by loading only map data with two-dimensional coordinates for a certain area around the coordinates of the reference position determined in step 700 from the map data storage unit 620, without loading all map data with two-dimensional coordinates stored in the map data storage unit 620. In such a manner, primary clipping is achieved.

In next step 750, a three-dimensional modeling process of modeling the loaded map data with two-dimensional coordinates into map data with three-dimensional coordinates is performed. The three-dimensional modeling process in step 750 comprises the following steps. A bottom map for a three-dimensional map with three-dimensional coordinates is generated from the loaded map data with two-dimensional coordinates (step 751). For example, lines for roads, green zones, rivers, lakes and the like are set. The heights of nodes for respective buildings are set (step 752). The respective buildings having the set heights are generated (step 753), and the travel path of the vehicle is then generated using arrows or dotted lines (step 754).

Here, the process of loading the map data with two-dimensional coordinates in step 740 and the three-dimensional modeling process in step 750 have been described by way of example in connection with a case where map data with two-dimensional coordinates are converted into map data with three-dimensional coordinates in a navigation system. However, as for games or the like in which three-dimensional images are displayed, since data on three-dimensional models have been previously stored in a storage means, data on three-dimensional models for a certain area based on coordinates of a reference position can be loaded directly from the storage means without performing the process of loading the map data with two-dimensional coordinates in step 740 and the three-dimensional modeling process in step 750.

In step 760, the control unit 640 performs a view point converting process. During the view point converting process in step 760, three-dimensional coordinates of respective nodes of data on models three-dimensionally expanded in the three-dimensional modeling process or the data on three-dimensional models loaded directly from the storage means are converted into those in a coordinate system based on the view point by means of three-dimensional shift, three-dimensional rotation or scale conversion.

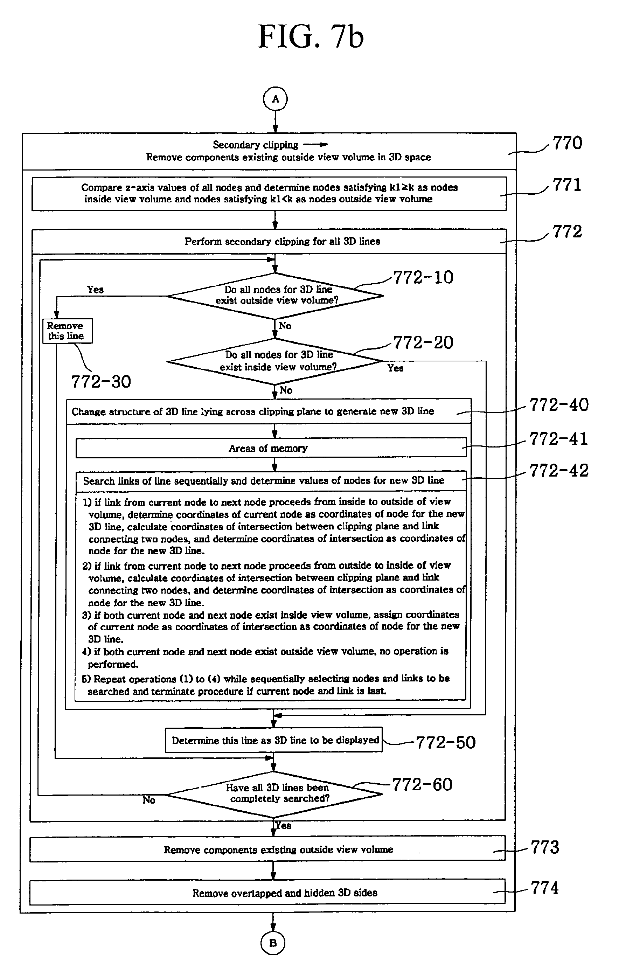

When the view point converting process is completely performed in step 760, the control unit 640 performs secondary clipping and removes components existing three-dimensionally outside a view volume, as shown in Fig. 7b (step 770).

As for the secondary clipping in step 770, z-axis values $k1$ of all nodes constituting a three-dimensional image are compared with a z-axis value $k$ of a clipping plane, nodes satisfying $k1 \geq k$ as the comparison results are determined to be nodes existing inside the view volume, and nodes satisfying $k1 < k$ are determined to be nodes existing outside the view volume (step 771). Then, it is determined through such comparison whether nodes for all three-dimensional lines exist outside or inside the view volume, while the nodes for the three-dimensional lines are sequentially searched, thereby performing secondary clipping (step 772).

As for the secondary clipping in step 772, it is determined whether all nodes constituting a three-dimensional line exist outside the view volume (step 772-10), and it is determined whether all the nodes constituting the three-dimensional line exist inside the view volume (step 772-20).

If it is determined in step 772-10 that all the nodes constituting the three-dimensional line exist outside the view volume, the control unit 640 removes the three-dimensional line existing outside the view volume (step 772-30) and determines whether all three-dimensional lines have been completely searched (step 772-60). If it is determined that all the three-dimensional lines have not been completely searched, the procedure returns to step 772-10, so that the operation for determining whether all nodes constituting a three-dimensional line exist outside or inside the view volume can be repeatedly performed.

If it is determined in step 772-20 that all the nodes constituting the three-dimensional line exist inside the view volume, the control unit 640 determines the corresponding three-dimensional line as a three-dimensional line to be displayed on the display panel 660 (step 772-50). Then, the control unit 640 determines whether all three-dimensional lines have been completely searched (step 772-60). If it is determined that all the three-dimensional lines have not been completely searched, the procedure returns to step 772-10, so that the operation for determining whether all nodes constituting a three-dimensional line exist outside or inside the view volume can be repeatedly performed.

Meanwhile, if it is determined in step 772-10 that all the nodes constituting the three-dimensional line do not necessarily exist outside the view volume and it is determined in step 772-20 that all the nodes do not necessarily exist inside the view volume, it is meant that the three-dimensional line lies across the clipping plane. The control unit 640 changes the structure of the three-dimensional line lying across the clipping plane to generate a three-dimensional line with a new structure (step 772-40).

As for the generation of the three-dimensional line with the new structure in step 772-40, areas of a memory are allocated to coordinates of nodes for the generated three-dimensional line to be stored therein (step 772-41). Links of the three-dimensional line are sequentially searched in order of nodes, and the coordinates of the nodes for the three-dimensional line with the new structure are determined and stored in the allocated areas of the memory (step 772-42).

The determination of the coordinates of the nodes for the three-dimensional line with the new structure in step 772-42 is made as follows.

If a link from a current node to the next node proceeds from the inside of the view volume to the outside of the view volume, the coordinates of the current node are determined as coordinates of a node for the three-dimensional line with the new structure, coordinates of an intersection between the clipping plane and the link connecting the two nodes are calculated, and the calculated coordinates of the intersection is determined as coordinates of a node for the three-dimensional line with the new structure.

If a link from a current node to the next node proceeds from the outside of the view volume to the inside of the view volume, coordinates of an intersection between the clipping plane and the link connecting the two nodes are calculated, and the calculated coordinates of the intersection is determined as coordinates of a node for the three-dimensional line with the new structure.

Here, the calculation of the coordinates of the intersection between the clipping plane and the link is made as follows.

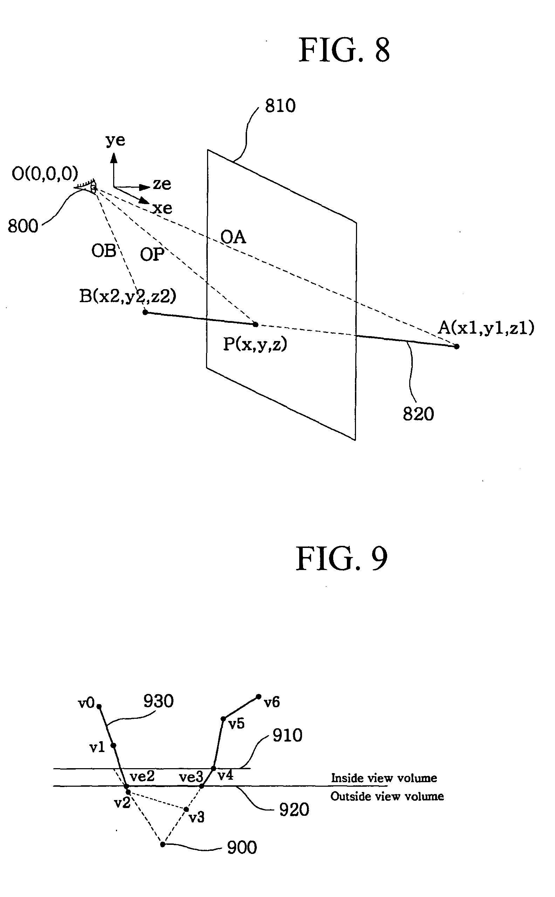

As shown in Fig. 8, assuming that a link 820 of a three-dimensional line connecting node A(x1, y1, z1) and node B(x2, y2, z2) lies across a clipping plane 810 placed at a position with an z-axis value of k with respect to a projection center position 800 that is view point O (0, 0, 0), intersection P(x, y, z) between the clipping plane 810 and the link 820 can be obtained from the following equation 1:

$$\overline{OP} = \overline{OA} + t(\overline{OB} - \overline{OA})$$

$$x = x1 + t(x2 - x1)$$

$$y = y1 + t(y2 - y1)$$

$$z = z1 + t(z2 - z1) \qquad (1)$$

Here, since the z-axis value of the clipping plane 810 is k, parameter t can be obtained from the following equation 2:

$$t = \frac{z1 - z}{z2 - z1} = \frac{z1 - k}{z1 - z2} \qquad (2)$$

Then, coordinates of intersection P(x, y, z) between the clipping plane 810 and the link 820 can be expressed as the following equation 3:

$$x = x1 + \frac{(z1 - k)(x2 - x1)}{z1 - z2}$$

$$y = y1 + \frac{(z1 - k)(y2 - y1)}{z1 - z2}$$

$$z = k \qquad (3)$$

If both the current node and the next node exist inside the view volume, the coordinates of the current node is assigned as coordinates of a node for the three-dimensional line with the new structure.

If both the current node and the next node exist outside the view volume, no operation is performed.

The determination of a node for the three-dimensional line with the new structure is repeated while nodes and links to be searched are sequentially selected one by one, and is then terminated when a current node and link is the last node and link.

That is, according to the present invention, an arbitrary clipping plane 920 with a z-axis coordinate value of k is formed between a projection center position 900 and a projection plane 910, and line clipping is performed at the clipping plane 920, as shown in Fig. 9. At this time, as for a three-dimensional line 930 consisting of nodes v0, v1, v2, v3, v4, v5 and v6, nodes v2 and v3 existing outside the clipping plane 920 are removed, intersections ve2 and ve3 between the three-dimensional line 930 and the clipping plane 920 are obtained, and a three-dimensional line with a new structure consisting of nodes v0, v1, ve2, ve3, v4, v5 and v6 is then generated.

When the three-dimensional line with the new structure is completely generated in step 772-40, the control unit 640 determines that the three-dimensional line with the new structure is a three-dimensional line to be displayed on the display panel 660 (step 772-50) and determines whether all three-dimensional lines have been completely searched (step 772-60). If it is determined that all the three-dimensional lines have not been completely searched, the procedure returns to step 772-10, so that the operation for clipping a three-dimensional line while determining whether all nodes constituting the three-dimensional line exist outside or inside the view volume can be repeatedly performed.

If it is determined in step 772-60 that all the three-dimensional lines have been completely searched, the control unit 640 removes all components, which exist outside the view volume, among all polygons and place names for a three-dimensional image (step 773) and removes overlapped and hidden three-dimensional sides (step 774). Thus, the secondary clipping operation is completed.

When the secondary clipping is completed in step 770, the control unit 640 performs a projection converting process (step 780).

The projection converting process performed in step 780 comprises the following steps. Three-dimensional coordinates of respective nodes converted into those in the coordinate system based on the view point are subjected to projection conversion onto the projection plane to obtain two-dimensional coordinates (step 781), and the two-dimensional coordinates projected onto the projection plane, i.e. projection coordinates, are converted into screen coordinates (step 782).

Then, a displaying process of displaying a three-dimensional map on the display panel 660 is performed (step 790). The displaying process performed in step 790 comprises the following steps. Polygons and polygonal lines for planar objects such as roads, green zones, rivers and lakes are displayed on the display panel 660 (step 791), polygonal lines for the travel path of the vehicle are displayed on the display panel 660 (step 792), polygons for respective three-dimensional buildings are displayed on the display panel 660 (step 793), and text data such as place names are then outputted to and displayed on the display panel 660 (step 794).

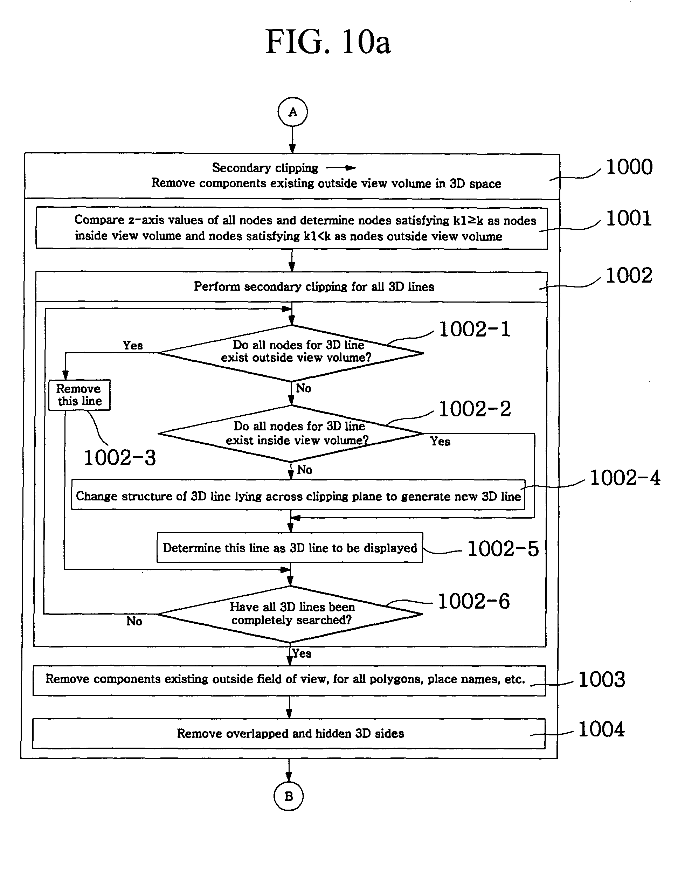

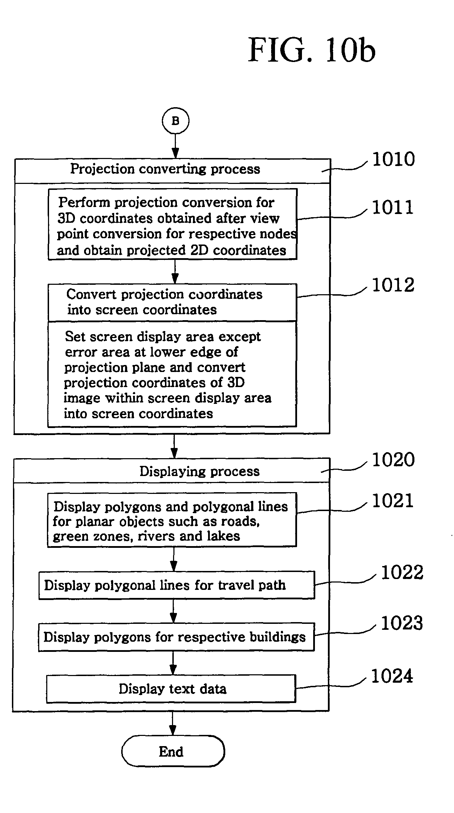

Figs. 10a and 10b are flowcharts illustrating the process of converting a two-dimensional map into a three-dimensional map and displaying the three-dimensional map on a screen while performing approximate clipping for three-dimensional lines according to another embodiment of the line clipping method of the present invention. As shown in the figure, after the view point converting process is performed in step 760 of Fig. 7a, the control unit 640 performs the secondary clipping to remove all components existing three-dimensionally outside the view volume (step 1000).

As for the secondary clipping in step 1000, z-axis values $kl$ of all nodes constituting the three-dimensional images are compared with the z-axis value $k$ of the clipping plane, nodes satisfying $kl \geq k$ as the comparison results are determined to be nodes existing inside the view volume, and nodes satisfying $kl < k$ are determined to be nodes existing outside the view volume (step 1001). Then, it is determined through such comparison whether nodes for all three-dimensional lines exist outside or inside the view volume, while the nodes for the three-dimensional lines are sequentially searched, thereby performing the secondary clipping (step 1002).

As for the secondary clipping in step 1002, it is determined whether all nodes constituting a three-dimensional line exist outside the view volume (step 1002-1), and it is determined whether all the nodes constituting the three-dimensional line exist inside the view volume (step 1002-2).

If it is determined in step 1002-1 that all the nodes constituting the three-dimensional line exist outside the view volume, the control unit 640 removes the corresponding three-dimensional line (step 1002-3) and determines whether all three-dimensional lines have been completely searched (step 1002-6). If it is determined that all the three-dimensional lines have not been completely searched, the procedure returns to step 1002-1, so that the operation for selecting the next three-dimensional line and determining whether all nodes constituting the three-dimensional line exist outside or inside the view volume can be repeatedly performed.

If it is determined in step 1002-2 that all the nodes constituting the three-dimensional line exist inside the view volume, the control unit 640 determines the corresponding three-dimensional line as a three-dimensional line to be displayed on the display panel 660 (step 1002-5). Then, the control unit 640 determines whether all three-dimensional lines have been completely searched (step 1002-6). If it is determined that all the three-dimensional lines have not been completely searched, the procedure returns to step 1002-1, so that the operation for selecting the next three-dimensional line and determining whether all nodes constituting the three-dimensional line exist outside or inside the view volume can be repeatedly performed.

Meanwhile, if it is determined in steps 1002-1 and 1002-2 that all the nodes constituting the three-dimensional line do not necessarily exist outside or inside the view volume, it is meant that the corresponding three-dimensional line lies across the clipping plane. The control unit 640 changes the structure of the three-dimensional line lying across the clipping plane to generate a three-dimensional line with a new structure (step 1002-4).

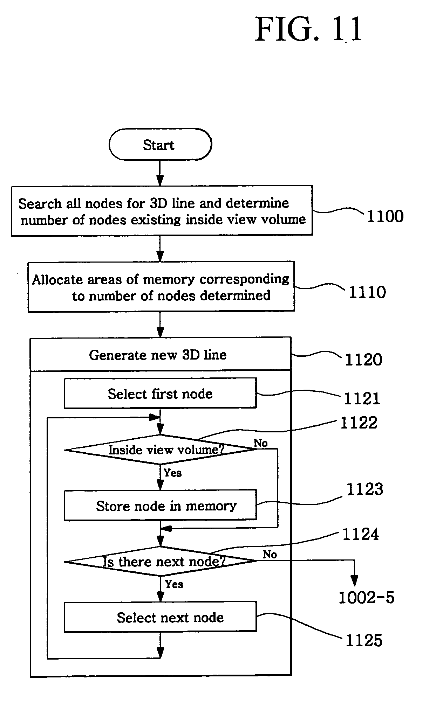

Fig. 11 is a flowchart illustrating an example of the process of generating a new three-dimensional line in step 1002-4. As shown in the figure, the control unit 640 sequentially searches nodes constituting a three-dimensional line and determines the number of nodes existing inside the view volume (step 1100), allocates storage areas of the memory corresponding to the number of nodes determined (step 1110), and generates a new three-dimensional line (step 1120).

As for the generation of the new three-dimensional line in step 1120, a first node for the three-dimensional line is selected (step 1121) and it is determined whether the selected first node exists inside the view volume (step 1122). If the selected first node exists inside the view volume, coordinates of the node are stored in the memory (step 1123). If the selected first node does not exist inside the view volume, its coordinates are not stored in the memory.

Then, it is determined whether there is the next node (step 1124). If it is determined that there is the next node, the next node is selected (step 1125) and the procedure returns to step 1122 so that the operation for storing coordinates of the selected node in the memory is repeatedly performed according to whether the selected node exists inside the view volume. If it is determined in step 1124 that there is no next node, the procedure returns to step 1002-5.

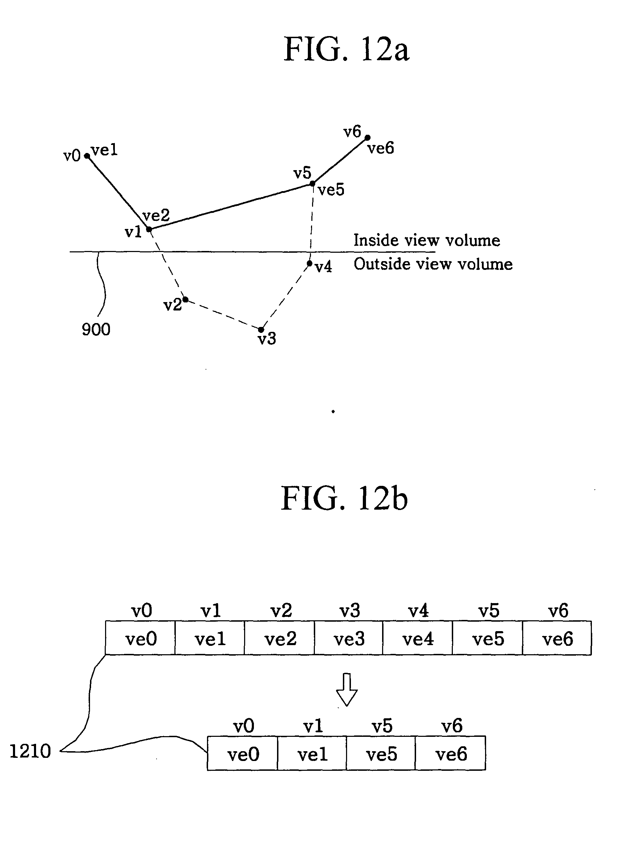

In this example of the present invention in which a new three-dimensional line is generated, for example, as for a three-dimensional line consisting of seven nodes of v0, v1, v2, v3, v4, v5 and v6 shown in Fig. 12a, four nodes of v0, v1, v5 and v6 existing inside the clipping plane 1200, i.e. inside the view volume, are determined. Then, areas of the memory 1210 in which coordinates of the four nodes will be stored are allocated thereto as shown in Fig. 12b. Coordinates ve0, ve1, ve5 and ve6 of nodes v0, v1, v5 and v6 are stored in the allocated areas of the memory 1210, respectively, to generate a three-dimensional line with a new structure.

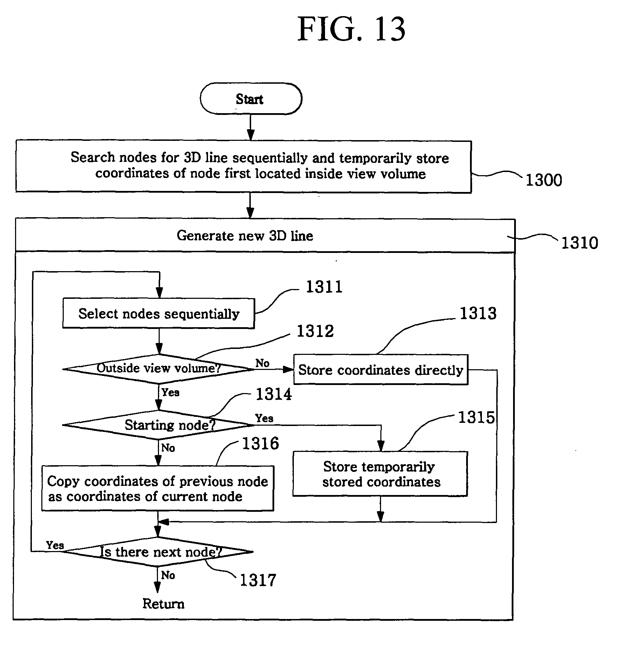

Fig. 13 is a flowchart illustrating another example of the process of generating a new three-dimensional line in step 1002-4. As shown in the figure, the control unit 640 sequentially searches all nodes constituting a three-dimensional line and temporarily stores coordinates of a node, which first exists inside the view volume, in the memory (step 1300), and then generates a new three-dimensional line while sequentially searching the respective nodes constituting the three-dimensional line (step 1310).

As for the generation of the new three-dimensional line in step 1310, one node is sequentially selected, i.e. a first node is selected (step 1311), and it is determined whether the selected node is a node existing outside the view volume (step 1312). If it is determined that the selected node does not exist outside the view volume but exists inside the view volume, coordinates of the corresponding node are directly stored in the memory (step 1313).

If it is determined in step 1312 that the selected node is a node existing outside the view volume, the control unit 640 determines whether the selected node is a starting node for the three-dimensional line (step 1314). If it is determined that the selected node is the starting node, the temporarily stored coordinates of the node, i.e. the coordinates of the node which first exists inside the view volume among the nodes for the three-dimensional line, are stored as coordinates of the starting node (step 1315). If it is determined in step 1314 that the selected node is not the starting node, coordinates of a just previous node are copied as coordinates of a current node and then stored (step 1316).

Then, it is determined whether there is the next node (step 1317). If it is determined that there is the next node, the procedure returns to step 1311 so that the next node is selected and the aforementioned operation is repeatedly performed.

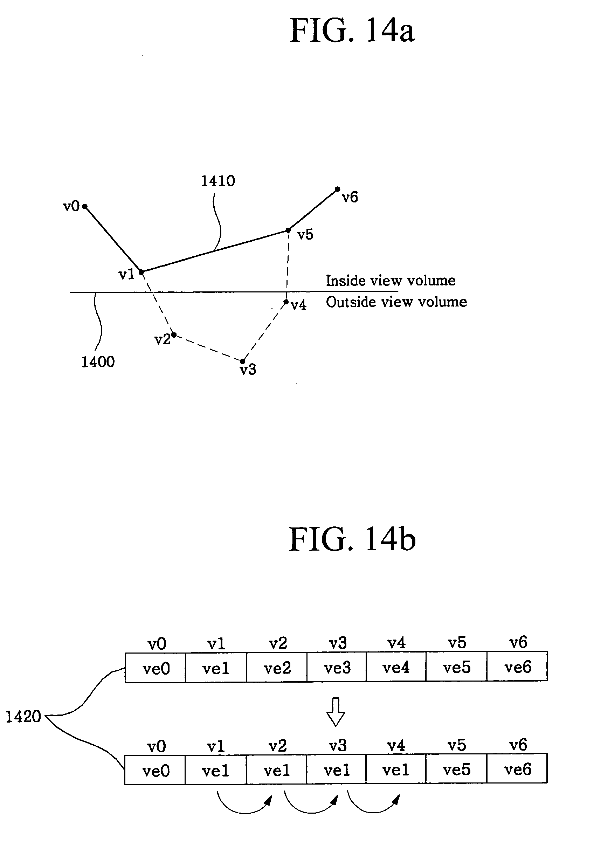

In this example of the present invention in which a new three-dimensional line is generated, for example, seven nodes of v0 to v6 constituting a three-dimensional line 1410 lying across a clipping plane 1400 as shown in Fig. 14a are sequentially searched. As for nodes v0, v1, v5 and v6 existing inside the view volume, coordinates ve0, ve1, ve5 and ve6 of nodes v0, v1, v5 and v6 are directly stored in a memory 1420 as shown in Fig. 14b. As for nodes v2, v3 and v4 existing outside the view volume, coordinates ve1 of node v1 which is a just previous node existing inside the view volume are sequentially copied as their coordinates and then stored.

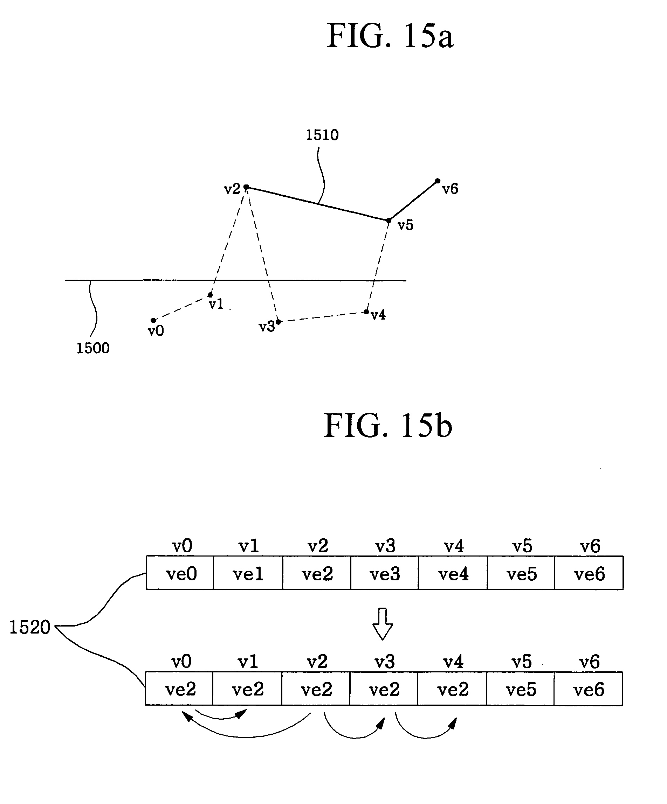

Meanwhile, if starting node v0 for a three-dimensional line 1510 consisting of seven nodes v0 to v6 lying across a clipping plane 1500 is a node existing outside the view volume as shown in Fig. 15a, node v2 which is first located inside the view volume among nodes v0 to v6 for the three-dimensional 1510 is searched for, and coordinates ve2 of node v2 are copied as coordinates of node v0 and stored in a memory 1520 as shown in Fig. 15b. Coordinates ve2 stored as the coordinates of node v0 are copied as coordinates of node v1 existing outside the view volume and then stored. Further, Coordinates ve2 of node v2 are sequentially copied as coordinates of nodes v3 and v4 existing outside the view volume and then stored. Accordingly, a three-dimensional line with a new structure is generated.

When the generation of a three-dimensional line with a new structure is completed in step 1002-4, the control unit 640 determines the generated three-dimensional line with the new structure as a three-dimensional line to be displayed on the display panel 660 (step 1002-5). The control unit 640 determines whether all three-dimensional lines have been completely searched (step 1002-6). If it is determined that all three-dimensional lines have not been completely searched, the procedure returns to step 1002-1. Then, the operation for selecting the next three-dimensional line and determining whether all nodes for the selected three-dimensional line exist outside or inside the view volume is repeatedly performed.

If it is determined in step 1002-6 that all three-dimensional lines have been completely searched, the control unit 640 removes all components existing outside the view volume among all polygons and place names for a three-dimensional image (step 1003) and removes overlapped and hidden three-dimensional sides (step 1004). In such a manner, the secondary clipping is completed.

When the secondary clipping is completed in step 1000, the control unit 640 performs a projection converting process (step 1010).

The projection converting process performed in step 1010 comprises the following steps. Three-dimensional coordinates of respective nodes converted into those in the coordinate system based on the view point are subjected to projection onto the projection plane to obtain two-dimensional coordinates (step 1011), and the two-dimensional coordinates projected onto the projection plane, i.e. projection coordinates, are converted into screen coordinates (step 1012).

Here, errors that may occur upon performing such approximate clipping may be projected onto a lower edge area of the projection plane and then displayed on the display panel 660. Thus, when the projection coordinates are converted into the screen coordinates in step 1012, the present invention sets up a screen display area except the lower edge area of the projection plane on which the errors are displayed, and converts projection coordinates of three-dimensional images within the screen display area into screen coordinates.

That is, according to this embodiment of the present invention, such errors that may occur upon performing the approximate clipping of three-dimensional lines are prevented from being displayed on the display panel 660 primarily by performing the approximate clipping at the clipping plane and secondarily by removing a certain area at the lower end of the projection plane upon converting the projection coordinates into the screen coordinates.

Then, a displaying process of displaying a three-dimensional map on the display panel 660 is performed (step 1020). The displaying process performed in step 1020 comprises the following steps. Polygons and polygonal lines for planar objects such as roads, green zones, rivers and lakes are displayed on the display panel 660 (step 1021), polygonal lines for the travel path of the vehicle are displayed on the display panel 660 (step 1022), polygons for respective three-dimensional buildings are displayed on the display panel 660 (step 1023), and text data such as place names are then outputted to and displayed on the display panel 660 (step 1024).

According to the present invention described above, a three-dimensional line with a new structure is constructed of nodes of a three-dimensional line, which exist inside a clipping plane, i.e. inside a view volume. Thus, a clipping rate for the three-dimensional line is very high and the amount of calculation required for processing a three-dimensional image is greatly reduced, resulting in a very high calculation rate. Accordingly, a three-dimensional image such as a three-dimensional map can be displayed in low-performance mobile equipment such as mobile communication terminals.

Although the present invention has been illustrated and described in connection with the preferred embodiments, it will be readily understood by those skilled in the art that various adaptations and changes can be made thereto without departing from the spirit and scope of the present invention defined by the appended claims. That is, although the present invention has been described by way of example as applying line clipping to converting data on a two-dimensional map into data on a three-dimensional map and displaying the converted data on a screen in a three-dimensional navigation system, it is not limited thereto. The present invention can be simply applied to a variety of fields including display of three-dimensional images on the screen of a display panel.

**Claims**

1.  A line clipping method, comprising:

    a position determining step of determining whether respective nodes for a three-dimensional line of a three-dimensional image to be projected onto a projection plane exist inside or outside a view volume, by comparing z-axis values of the nodes with a z-axis value of a clipping plane with respect to a projection center position; and
    a line clipping step of calculating intersections between the clipping plane and links connecting the nodes for the three-dimensional line if it is determined in the position determining step that the nodes for the three-dimensional line exist both inside and outside the view volume, and constructing a new three-dimensional line using the calculated intersections and the nodes existing inside the view volume.

2. The method as claimed in claim 1, wherein the clipping plane is interposed between the projection center position and the projection plane.

3. The method as claimed in claim 1, wherein the line clipping step comprises the steps of:

   (a) allocating areas of a memory for storing coordinates of nodes for the new three-dimensional line;
   (b) if the links proceed from nodes existing inside the view volume to nodes existing outside the view volume, determining the nodes existing inside the view volume and the intersections between the links and the clipping plane as nodes for the new three-dimensional line;
   (c) if the links proceed from nodes existing outside the view volume to nodes existing inside the view volume, determining the intersections between the links and the clipping plane as nodes for the new three-dimensional line;
   (d) if the links proceed from nodes existing inside the view volume to nodes existing inside the view volume, determining the both nodes of each of the links as nodes for the new three-dimensional line; and
   (e) storing the nodes for the new three-dimensional line determined in steps (b) to (d) in the corresponding areas of the memory allocated in step (a).

4. A line clipping method, comprising:

   a position determining step of determining whether respective nodes for a three-dimensional line of a three-dimensional image to be projected onto a projection plane exist inside or outside a view volume, by comparing z-axis values of the nodes with a z-axis value of a clipping plane with respect to a projection center position; and
   a line clipping step of constructing a new three-dimensional line using only the nodes existing inside the view volume if it is determined in the position determining step that the three-dimensional line is a three-dimensional line with the nodes existing both inside and outside the view volume.

5. The method as claimed in claim 4, wherein the clipping plane is interposed between the projection center position and the projection plane.

6. The method as claimed in claim 4, wherein the line clipping step comprises the steps of:

   (a') determining the number of nodes existing inside the view volume among the nodes for the three-dimensional line;
   (b') allocating areas of a memory for storing coordinates of the nodes of which the number is determined in step (a'); and
   (c') constructing a new three-dimensional line by storing the coordinates of the nodes existing inside the view volume determined in step (a') in the corresponding areas of the memory allocated in step (b').

7. The method as claimed in claim 4, wherein the line clipping step comprises the steps of:

   (a") searching for a node which is first located inside the view volume among the nodes for the three-dimensional line;
   (b") sequentially selecting the respective nodes for the three-dimensional line, and determining whether the nodes exist inside or outside the view volume;
   (c") if it is determined in step (b") that the nodes exist inside the view volume, storing coordinates of the nodes in corresponding areas of a memory;
   (d") if it is determined in step (b") that the nodes exist outside the view volume, determining whether one of the nodes is a starting node for the three-dimensional line;
   (e") if it is determined in step (d") that one of the nodes is the starting node for the three-dimensional line, storing coordinates of the node which is first located inside the view volume searched in step (a") in an area of the memory for coordinates of the starting node; and
   (f") if it is determined in step (d") that one of the nodes is not the starting node for the three-dimensional line, copying the coordinates of a just previous node stored in the memory in step (c") or (e") to a corresponding area of the memory for coordinates of the current node.

8. A method for displaying a three-dimensional image using line clipping, comprising:

   a three-dimensional environment initializing step of initializing three-dimensional image display environments;
   a view point setting step of setting a view point and a sight line based on coordinates of a reference position after the three-dimensional environment initializing step;

a projection parameter setting step of setting projection parameters after the view point setting step;

a three-dimensional image inputting step of inputting the three-dimensional image for an area based on the coordinates of the reference position;

a view point converting step of converting the three-dimensional image inputted in the three-dimensional image inputting step into that in a coordinate system based on the view point set in the view point setting step;

a clipping step of reconstructing a three-dimensional line lying across a clipping plane, within the converted three-dimensional image in the coordinate system based on the view point obtained in the view point converting step, removing components existing outside a view volume, and removing overlapped and hidden three-dimensional sides;

a projection converting step of projecting a three-dimensional image obtained after the clipping performed in the clipping step onto a projection plane according to the projection parameters set in the projection parameter setting step, and converting projection coordinates into screen coordinates; and

a displaying step of displaying a three-dimensional image with the converted screen coordinates obtained in the projection converting step on a screen.

9. The method as claimed in claim 8, wherein the coordinates of the reference position are coordinates of a current vehicle location detected from navigation messages received by a GPS receiver, or coordinates inputted by a user.

10. The method as claimed in claim 8, wherein the three-dimensional environment initializing step comprises the steps of:

setting colors and their depths for use in displaying respective sides of buildings according to the view point, a sight line, the direction of a light source, the intensity of the light source, and angles of the respective sides of the buildings;

initializing depth buffers for indicating distances from the view point to positions where objects to be displayed will be displayed; and

setting a predetermined color as a background color of the screen.

11. The method as claimed in claim 8, wherein the view point setting step comprises the step of setting a position elevated by a predetermined height at the coordinates of the reference position as the view point, and setting a sight line at the set view point.

12. The method as claimed in claim 11, wherein the sight line is in a travel direction of a vehicle detected from navigation messages received by a GPS receiver.

13. The method as claimed in claim 8, wherein the reconstruction of the three-dimensional line in the clipping step comprises:

a position determining step of determining whether respective nodes for the three-dimensional line of the three-dimensional image to be projected onto the projection plane exist inside or outside the view volume, by comparing z-axis values of the nodes with a z-axis value of the clipping plane with respect to a projection center position; and

a line clipping step of calculating intersections between the clipping plane and links connecting the nodes for the three-dimensional line if it is determined in the position determining step that the nodes for the three-dimensional line exist both inside and outside the view volume, and constructing a new three-dimensional line using the calculated intersections and the nodes existing inside the view volume.

14. The method as claimed in claim 13, wherein the clipping plane is interposed between the projection center position and the projection plane.

15. The method as claimed in claim 13, wherein the line clipping step comprises the steps of:

(a) allocating areas of a memory for storing coordinates of nodes for the new three-dimensional line;

(b) if the links proceed from nodes existing inside the view volume to nodes existing outside the view volume, determining the nodes existing inside the view volume and the intersections between the links and the clipping plane as nodes for the new three-dimensional line;

(c) if the links proceed from nodes existing outside the view volume to nodes existing inside the view volume, determining the intersections between the links and the clipping plane as nodes for the new three-dimensional line;

(d) if the links proceed from nodes existing inside the view volume to nodes existing inside the view volume, determining the both nodes of each of the links as nodes for the new three-dimensional line; and

(e) storing the nodes for the new three-dimensional line determined in steps (b) to (d) in the corresponding areas of the memory allocated in step (a).

16. The method as claimed in claim 8, wherein the reconstruction of the three-dimensional line in the clipping step comprises:

a position determining step of determining whether respective nodes for the three-dimensional line of the three-dimensional image to be projected onto the projection plane exist inside or outside the view volume, by comparing z-axis values of the nodes with a z-axis value of the clipping plane with respect to a projection center position; and
a line clipping step of constructing a new three-dimensional line using only the nodes existing inside the view volume if it is determined in the position determining step that the three-dimensional line is a three-dimensional line with the nodes existing both inside and outside the view volume.

17. The method as claimed in claim 16, wherein the clipping plane is interposed between the projection center position and the projection plane.

18. The method as claimed in claim 16, wherein the line clipping step comprises the steps of:

(a') determining the number of nodes existing inside the view volume among the nodes for the three-dimensional line;
(b') allocating areas of a memory for storing coordinates of the nodes of which the number is determined in step (a'); and
(c') constructing a new three-dimensional line by storing the coordinates of the nodes existing inside the view volume determined in step (a') in the corresponding areas of the memory allocated in step (b').

19. The method as claimed in claim 16, wherein the line clipping step comprises the steps of:

(a") searching for a node which is first located inside the view volume among the nodes for the three-dimensional line;
(b") sequentially selecting the respective nodes for the three-dimensional line, and determining whether the nodes exist inside or outside the view volume;
(c") if it is determined in step (b") that the nodes exist inside the view volume, storing coordinates of the nodes in corresponding areas of a memory;
(d") if it is determined in step (b") that the nodes exist outside the view volume, determining whether one of the nodes is a starting node for the three-dimensional line;
(e") if it is determined in step (d") that one of the nodes is the starting node for the three-dimensional line, storing coordinates of the node which is first located inside the view volume searched in step (a") in an area of the memory for coordinates of the starting node; and
(f") if it is determined in step (d") that one of the nodes is not the starting node for the three-dimensional line, copying the coordinates of a just previous node stored in the memory in step (c") or (e") to a corresponding area of the memory for coordinates of the current node.

20. A method for displaying a three-dimensional image using line clipping, comprising:

a three-dimensional environment initializing step of initializing three-dimensional image display environments;
a view point setting step of setting a view point and a sight line based on coordinates of a reference position after the three-dimensional environment initializing step;
a projection parameter setting step of setting projection parameters after the view point setting step;
a loading step of loading a two-dimensional map for an area based on the coordinates of the reference position;
a three-dimensional modeling step of modeling the two-dimensional map loaded in the loading step into a three-dimensional image;
a view point converting step of converting the three-dimensional image modeled in the three-dimensional modeling step into that in a coordinate system based on the view point set in the view point setting step;
a clipping step of reconstructing a three-dimensional line lying across a clipping plane, within the converted three-dimensional image in the coordinate system based on the view point obtained in the view point converting step, removing components existing outside a view volume, and removing overlapped and hidden three-dimensional sides;
a projection converting step of projecting a three-dimensional image obtained after the clipping performed in the clipping step onto a projection plane according to the projection parameters set in the projection parameter setting step, and converting projection coordinates into screen coordinates; and
a displaying step of displaying a three-dimensional image with the converted screen coordinates obtained in the projection converting step on a screen.

21. The method as claimed in claim 20, wherein the coordinates of the reference position are coordinates of a current vehicle location detected from navigation messages received by a GPS receiver, or coordinates inputted by a user.

22. The method as claimed in claim 20, wherein the three-dimensional environment initializing step comprises the steps of:

setting colors and their depths for use in displaying respective sides of buildings according to the view point, a sight line, the direction of a light source, the intensity of the light source, and angles of the respective sides of the buildings;
initializing depth buffers for indicating distances from the view point to positions where objects to be displayed will be displayed; and
setting a predetermined color as a background color of the screen.

23. The method as claimed in claim 20, wherein the view point setting step comprises the step of setting a position elevated by a predetermined height at the coordinates of the reference position as the view point, and setting a sight line at the set view point.

24. The method as claimed in claim 23, wherein the sight line is in a travel direction of a vehicle detected from navigation messages received by a GPS receiver.

25. The method as claimed in claim 20, wherein the reconstruction of the three-dimensional line in the clipping step comprises:

a position determining step of determining whether respective nodes for the three-dimensional line of the three-dimensional image to be projected onto the projection plane exist inside or outside the view volume, by comparing z-axis values of the nodes with a z-axis value of the clipping plane with respect to a projection center position; and
a line clipping step of calculating intersections between the clipping plane and links connecting the nodes for the three-dimensional line if it is determined in the position determining step that the nodes for the three-dimensional line exist both inside and outside the view volume, and constructing a new three-dimensional line using the calculated intersections and the nodes existing inside the view volume.

26. The method as claimed in claim 25, wherein the clipping plane is interposed between the projection center position and the projection plane.

27. The method as claimed in claim 25, wherein the line clipping step comprises the steps of:

(a) allocating areas of a memory for storing coordinates of nodes for the new three-dimensional line;
(b) if the links proceed from nodes existing inside the view volume to nodes existing outside the view volume, determining the nodes existing inside the view volume and the intersections between the links and the clipping plane as nodes for the new three-dimensional line;
(c) if the links proceed from nodes existing outside the view volume to nodes existing inside the view volume, determining the intersections between the links and the clipping plane as nodes for the new three-dimensional line;
(d) if the links proceed from nodes existing inside the view volume to nodes existing inside the view volume, determining the both nodes of each of the links as nodes for the new three-dimensional line; and
(e) storing the nodes for the new three-dimensional line determined in steps (b) to (d) in the corresponding areas of the memory allocated in step (a).

28. The method as claimed in claim 20, wherein the reconstruction of the three-dimensional line in the clipping step comprises:

a position determining step of determining whether respective nodes for the three-dimensional line of the three-dimensional image to be projected onto the projection plane exist inside or outside the view volume, by comparing z-axis values of the nodes with a z-axis value of the clipping plane with respect to a projection center position; and
a line clipping step of constructing a new three-dimensional line using only the nodes existing inside the view volume if it is determined in the position determining step that the three-dimensional line is a three-dimensional line with the nodes existing both inside and outside the view volume.

29. The method as claimed in claim 28, wherein the clipping plane is interposed between the projection center position and the projection plane.

30. The method as claimed in claim 28, wherein the line clipping step comprises the steps of:

(a') determining the number of nodes existing inside the view volume among the nodes for the three-dimensional line;

(b') allocating areas of a memory for storing coordinates of the nodes of which the number is determined in step (a'); and

(c') constructing a new three-dimensional line by storing the coordinates of the nodes existing inside the view volume determined in step (a') in the corresponding areas of the memory allocated in step (b').

31. The method as claimed in claim 28, wherein the line clipping step comprises the steps of:

(a") searching for a node which is first located inside the view volume among the nodes for the three-dimensional line;

(b") sequentially selecting the respective nodes for the three-dimensional line, and determining whether the nodes exist inside or outside the view volume;

(c") if it is determined in step (b") that the nodes exist inside the view volume, storing coordinates of the nodes in corresponding areas of a memory;

(d") if it is determined in step (b") that the nodes exist outside the view volume, determining whether one of the nodes is a starting node for the three-dimensional line;

(e") if it is determined in step (d") that one of the nodes is the starting node for the three-dimensional line, storing coordinates of the node which is first located inside the view volume searched in step (a") in an area of the memory for coordinates of the starting node; and

(f") if it is determined in step (d") that one of the nodes is not the starting node for the three-dimensional line, copying the coordinates of a just previous node stored in the memory in step (c") or (e") to a corresponding area of the memory for coordinates of the current node.

32. A method for displaying a three-dimensional image using line clipping, comprising:

a three-dimensional environment initializing step of initializing three-dimensional image display environments;

a view point setting step of setting a view point and a sight line based on coordinates of a reference position after the three-dimensional environment initializing step;

a projection parameter setting step of setting projection parameters after the view point setting step;

a three-dimensional model inputting step of inputting the three-dimensional image with three-dimensional coordinates for an area based on the coordinates of the reference position;

a view point converting step of converting the three-dimensional image inputted in the three-dimensional model inputting step into that in a coordinate system based on the view point set in the view point setting step;

a clipping step of constructing a three-dimensional line lying across a clipping plane, within the converted three-dimensional image in the coordinate system based on the view point obtained in the view point converting step, into a new three-dimensional line using nodes existing inside a view volume, removing components existing outside the view volume, and removing overlapped and hidden three-dimensional sides;

a projection converting step of projecting a three-dimensional image obtained after the clipping performed in the clipping step onto a projection plane according to the projection parameters set in the projection parameter setting step, and converting projection coordinates into screen coordinates; and

a displaying step of displaying a three-dimensional image with the converted screen coordinates obtained in the projection converting step on a screen.

33. A method for displaying a three-dimensional image using line clipping, comprising:

a three-dimensional environment initializing step of initializing three-dimensional image display environments;

a view point setting step of setting a view point and a sight line based on coordinates of a reference position after the three-dimensional environment initializing step;

a projection parameter setting step of setting projection parameters after the view point setting step;

a loading step of loading a two-dimensional map for an area based on the coordinates of the reference position;

a three-dimensional modeling step of modeling the two-dimensional map loaded in the loading step into a three-dimensional image;

a view point converting step of converting the three-dimensional image modeled in the three-dimensional modeling step into that in a coordinate system based on the view point set in the view point setting step;

a clipping step of constructing a three-dimensional line lying across a clipping plane, within the converted three-dimensional image in the coordinate system based on the view point obtained in the view point converting step, into a new three-dimensional line using nodes existing inside a view volume, removing components existing outside the view volume, and removing overlapped and hidden three-dimensional sides;

a projection converting step of projecting a three-dimensional image obtained after the clipping performed in the clipping step onto a projection plane according to the projection parameters set in the projection parameter setting step, and converting projection coordinates into screen coordinates; and

a displaying step of displaying a three-dimensional image with the converted screen coordinates obtained in the projection converting step on a screen.

# FIG. 1

# FIG. 2a

# FIG. 2b

# FIG. 3

# FIG. 4

# FIG. 5

# FIG. 6

# FIG.7a

```
                    ( Start )
                        │
                        ▼
        ┌───────────────────────────────────────┐
        │ Determine coordinates of reference position │───── 700
        └───────────────────────────────────────┘
                        │
            ┌───────────┴──────────────┐
            ▼                          ▼
```

710 ── **3D environment initializing process**

711 ── Initialize lighting environment

712 ── Initialize depth buffers

713 ── Clear screen background color

720 ── **View point setting process**

721 ── Set position of view point

722 ── Set direction of sight line

730 ── Set projection parameters

**Data on 2D map** ──── 740

**3D modeling process** ──── 750

Generate bottom map for 3D map (roads, green zones, rivers, lakes, etc.) ──── 751

Set heights of nodes of buildings ──── 752

Generate 3D buildings with set heights ──── 753

Generate travel path ──── 754

**View point converting process** ──── 760

Convert 3D coordinates of nodes for each model into those in coordinate system based on view point through shift, rotation and scale conversion

( A )

# FIG. 7b

(A)

Secondary clipping ——► 
Remove components existing outside view volume in 3D space — 770

Compare z-axis values of all nodes and determine nodes satisfying k1≥k as nodes inside view volume and nodes satisfying k1<k as nodes outside view volume — 771

Perform secondary clipping for all 3D lines — 772

Do all nodes for 3D line exist outside view volume? — 772-10

Yes

Remove this line — 772-30

No

Do all nodes for 3D line exist inside view volume? — 772-20

Yes

No

Change structure of 3D line lying across clipping plane to generate new 3D line — 772-40

Areas of memory — 772-41

Search links of line sequentially and determine values of nodes for new 3D line — 772-42

1) if link from current node to next node proceeds from inside to outside of view volume, determine coordinates of current node as coordinates of node for the new 3D line, calculate coordinates of intersection between clipping plane and link connecting two nodes, and determine coordinates of intersection as coordinates of node for the new 3D line.

2) if link from current node to next node proceeds from outside to inside of view volume, calculate coordinates of intersection between clipping plane and link connecting two nodes, and determine coordinates of intersection as coordinates of node for the new 3D line.

3) if both current node and next node exist inside view volume, assign coordinates of current node as coordinates of intersection as coordinates of node for the new 3D line.

4) if both current node and next node exist outside view volume, no operation is performed.

5) Repeat operations (1) to (4) while sequentially selecting nodes and links to be searched and terminate procedure if current node and link is last.

Determine this line as 3D line to be displayed — 772-50

Have all 3D lines been completely searched? — 772-60

No

Yes

Remove components existing outside view volume — 773

Remove overlapped and hidden 3D sides — 774

(B)

# FIG. 7c

B

**780** Projection converting process

**781** Perform projection conversion for 3D coordinates obtained after view point conversion for respective nodes and obtain projected 2D coordinates

**782** Convert projection coordinates into screen coordinates

**790** Displaying process

**791** Display polygons and polygonal lines for planar objects such as roads, green zones, rivers and lakes

**792** Display polygonal lines for travel path

**793** Display polygons for respective buildings

**794** Display text data

End

# FIG. 8

810

ye

O(0,0,0)
ze
xe
800

OA

OB    OP

B(x2,y2,z2)

A(x1,y1,z1)

P(x,y,z)

820

# FIG. 9

v0    930    v6

v1    v5    910

ve2    ve3    v4
v2    Inside view volume
Outside view volume
v3    920

900

EP 1 538 569 A2

# FIG. 10a

(A)

**Secondary clipping** ⟶
Remove components existing outside view volume in 3D space — 1000

Compare z-axis values of all nodes and determine nodes satisfying $k1 \geq k$ as nodes inside view volume and nodes satisfying $k1 < k$ as nodes outside view volume — 1001

Perform secondary clipping for all 3D lines — 1002

Do all nodes for 3D line exist outside view volume? — 1002-1

Yes

**Remove this line** — 1002-3

No

Do all nodes for 3D line exist inside view volume? — 1002-2

Yes

No

Change structure of 3D line lying across clipping plane to generate new 3D line — 1002-4

Determine this line as 3D line to be displayed — 1002-5

Have all 3D lines been completely searched? — 1002-6

No

Yes

Remove components existing outside field of view, for all polygons, place names, etc. — 1003

Remove overlapped and hidden 3D sides — 1004

(B)

25

# FIG. 10b

B

**Projection converting process** — 1010

Perform projection conversion for
3D coordinates obtained after view
point conversion for respective nodes
and obtain projected 2D coordinates — 1011

Convert projection coordinates
into screen coordinates — 1012

Set screen display area except
error area at lower edge of
projection plane and convert
projection coordinates of 3D
image within screen display area
into screen coordinates

**Displaying process** — 1020

Display polygons and polygonal lines
for planar objects such as roads,
green zones, rivers and lakes — 1021

Display polygonal lines for travel path — 1022

Display polygons for respective buildings — 1023

Display text data — 1024

End

# FIG. 11

```
                    ┌─────────────┐
                    │    Start    │
                    └──────┬──────┘
                           │
         ┌─────────────────▼─────────────────┐
         │ Search all nodes for 3D line and determine │──── 1100
         │ number of nodes existing inside view volume│
         └─────────────────┬─────────────────┘
                           │
         ┌─────────────────▼─────────────────┐
         │ Allocate areas of memory corresponding │──── 1110
         │   to number of nodes determined     │
         └─────────────────┬─────────────────┘
                           │
         ┌─────────────────▼─────────────────┐
         │        Generate new 3D line       │──── 1120
         │  ┌─────────────────────────────┐  │
         │  │      Select first node      │──┼── 1121
         │  └──────────────┬──────────────┘  │
         │                 │          1122   │
         │         ┌───────▼──────┐   No     │
         │         │Inside view volume?├────► │
         │         └───────┬──────┘          │
         │               Yes                 │
         │         ┌───────▼──────┐   1123   │
         │         │Store node in memory│     │
         │         └───────┬──────┘          │
         │                 │         1124    │
         │         ┌───────▼──────┐   No     │
         │         │Is there next node?├──────┼──► 1002-5
         │         └───────┬──────┘          │
         │               Yes                 │
         │         ┌───────▼──────┐          │
         │         │Select next node│──── 1125│
         │         └──────────────┘          │
         └───────────────────────────────────┘
```

EP 1 538 569 A2

# FIG. 12a

# FIG. 12b

28

# FIG. 13

Start

Search nodes for 3D line sequentially and temporarily store
coordinates of node first located inside view volume — 1300

Generate new 3D line — 1310

Select nodes sequentially — 1311

Outside view volume? — 1312
No → Store coordinates directly — 1313

Yes

Starting node? — 1314
Yes → Store temporarily stored coordinates — 1315

No — 1316

Copy coordinates of previous node
as coordinates of current node

Is there next node? — 1317
Yes

No

Return

# FIG. 14a

# FIG. 14b

# FIG. 15a

# FIG. 15b